# EUROPEAN PATENT SPECIFICATION

(11) **EP 3 182 763 B1**
(45) Date of publication and mention of the grant of the patent: **09.10.2019**
(21) Application number: 14900085.3
(22) Date of filing: 20.08.2014
(51) Int. Cl.: H04W 76/18

(54) **METHOD AND APPARATUS FOR NETWORK ACCESS**
VERFAHREN UND VORRICHTUNG FÜR NETZWERKZUGANG
PROCÉDÉ ET APPAREIL D'ACCÈS AU RÉSEAU

(43) Date of publication of application: 21.06.2017
(73) Proprietor: Huawei Technologies Co. Ltd., Shenzhen, Guangdong 518129 (CN)
(72) Inventor: CAO, Dengjing, Shenzhen Guangdong 518129 (CN); CHEN, Jing, Shenzhen Guangdong 518129 (CN)
(74) Representative: Gill Jennings & Every LLP
(86) International application number: PCT/CN2014/084825
(87) International publication number: WO 2016/026102

(56) References cited:
- CN-A- 102 461 256
- CN-A- 102 461 275
- CN-A- 102 461 276
- CN-A- 102 461 277
- CN-A- 102 783 217
- CN-A- 102 857 994
- CN-A- 102 893 673
- US-A1- 2011 194 505
- US-A1- 2012 014 354
- US-A1- 2012 044 867
- US-A1- 2013 272 207
- NEC: "Impacts on UE modes of operation from stage 2 principles for CS domain and IM CN Subsystem selection", 3GPP DRAFT; C1-092533, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles; 20090701, 1 July 2009 (2009-07-01), XP050349353, [retrieved on 2009-07-01]

## Description

### TECHNICAL FIELD

The present invention relates to the field of wireless communications technologies, and in particular, to a network access method and apparatus.

### BACKGROUND

At present, mobile communication networks include a GSM, a UMTS, and an LTE. Each network uses a private access network. For example, an access network of a GSM is a GERAN, an access network of a UMTS is a UTRAN, and an access network of an LTE is an E-UTRAN, where the GERAN and the UTRAN may be implemented by using a same set of network devices. To improve network use efficiency, network functions are classified according to network rates. For example, GSM and UMTS networks are used for voice services (such as making telephone calls), and an LTE network is used for data services (such as accessing the Internet). If a UE needs to perform a voice service after performing a data service, a network side enables, by using a CSFB technology, the UE to fall back to a circuit switched domain (circuit section, CS for short) of the GSM/UMTS, and the UE performs the voice service in the CS domain. If the network side or the UE cannot provide the CSFB technology, implementing the voice service in an LTE network, also known as a VoLTE technology or an IMS voice solution, is considered. In the VoLTE technology, an IMS network and an LTE network are used, where the IMS network is used to implement signaling processing functions such as call establishment, number analysis, or call clearing, while a voice data bearer is used to implement voice data bearing and transmission in the LTE network. A specific process is as follows:
Step 1: A UE establishes an IMS PDN connection connecting the LTE and the IMS in series, and registers with the IMS network by using an established IMS PDN connection, so that the IMS network can implement signaling processing such as call establishment, number analysis, or call clearing.
Step 2: The UE completes in the LTE, by using the established IMS PDN, signaling interaction that needs to be performed during a voice bearer establishment process, and establishes a voice bearer channel in the LTE.
Step 3: After the voice bearer channel is established successfully, voice data transmission is performed in the LTE network by using the established voice bearer to implement the voice service.

During implementation of the forgoing network access, the inventor finds that the prior art has at least the following problems.

In an existing mobile terminal, there exists a case in which an underlying chip supports IMS voice, but an upper-layer service (such as software in the terminal) does not support IMS voice. For example, an underlying chip of a UE (such as iPhone 5 of Apple) supports IMS voice, but an upper-layer service does not support IMS voice. When the UE accesses a network, a UE mode configuration reported by the UE to the network side is voice centric "Voice Centric", and CS voice preferred, IMS PS Voice as secondary "CS voice preferred, IMS PS Voice as secondary". When the UE accesses an LTE to perform a voice service, if the network side supports a VoLTE technology but does not deploy CSFB, information in response to the terminal by the network is "registration in CS domain failed", and the network side prompts the terminal that the network side supports the VoLTE technology. After the UE receives the response, because the underlying chip of the UE supports IMS voice, the UE does not reselect a GERAN/UTRAN network, and the UE continues to camp on the LTE network (E-UTRAN) and prepares to implement the VoLTE technology. However, because the upper-layer service of the UE does not support IMS voice and the underlying chip cannot implement the VoLTE technology independently, the UE cannot implement VoLTE, that is, the UE cannot establish, in the LTE network, a voice bearer channel for performing voice service data transmission, causing unavailability of a voice service of the UE.

US 2011/0194505 relates to methods and apparatus to support voice solutions for data centric terminals. US 2012/0044867 relates to methods and apparatus to maintain call continuity.

### SUMMARY

Embodiments of the present invention provide a network access method and apparatus, which are used to resolve a problem that a UE cannot use a voice service in an LTE network.

In a first aspect, a network access apparatus is provided, where the apparatus includes:
a ready-to-switch-network user equipment determining unit, configured to: determine a user equipment as a ready-to-switch-network user equipment according to an IMS function support status of the user equipment UE when registration in a circuit switched domain fails, where the IMS function support status is used to indicate whether the user equipment supports IMS voice;
a target user equipment determining unit, configured to determine the ready-to-switch-network user equipment as a target user equipment according to a communication configuration parameter of the ready-to-switch-network user equipment, where the communication configuration parameter is used to indicate a preferred service type of the ready-to-switch-network user equipment; and
a sending unit, configured to send a network switch indication carrying a preset cause value to the target user equipment determined by the target user equipment determining unit, where the network switch indication is used to instruct the target user equipment to access a voice service access network;
where the ready-to-switch-network user equipment determining unit is further configured to:
   when registration in the circuit switched domain fails, if the user equipment supports an IMS function and does not establish an IMS bearer in a preset period, determine the user equipment as a ready-to-switch-network user equipment;
   where the target user equipment determining unit includes:
      an acquiring subunit, configured to acquire the communication configuration parameter of the ready-to-switch-network user equipment determined by the ready-to-switch-network user equipment determining unit; and
      a determining subunit, configured to: when the communication configuration parameter acquired by the acquiring subunit is voice centric Voice Centric, determine the ready-to-switch-network user equipment as a target user equipment device.

With reference to the first aspect, in a first implementation manner, the sending unit is further configured to: when the target user equipment is in Connect state, send a Detach Request to the target user equipment by using a base station, where the detach request carries the preset cause value; or
the apparatus further includes a receiving unit, where the receiving unit is configured to receive a tracking area update request Tracking Area Update Request sent by the target user equipment; and the sending unit is further configured to send a tracking area update reject response Tracking Area Update Reject to the target user equipment, where the tracking area update reject response carries the preset cause value.

With reference to the first aspect or any of the preceding manners, in a second implementation manner, the sending unit is further configured to: when the target user equipment is in an Idle state, send Paging signaling to the target user equipment by using a base station;
the receiving unit is further configured to receive a service request Service Request that is sent by the target user equipment according to the Paging signaling; and
the apparatus further includes a connect state determining unit, where the connect state determining unit is configured to determine, according to the service request received by the receiving unit, that the target user equipment is in a connect state.

With reference to the first aspect or any of the preceding manners, in a third implementation manner, the sending unit is further configured to: when the target user equipment is in Connect state, send a Detach Request to the target user equipment;
the receiving unit is further configured to receive an attach request Attach Request sent by the target user equipment; and
the sending unit is further configured to send an attach reject Attach Reject to the target user equipment, where the attach reject carries the preset cause value.

With reference to the first aspect or any of the preceding manners, in a fourth implementation manner, the sending unit is further configured to: when the target user equipment is in an Idle state, send a Paging message to the target user equipment by using a base station, where the paging message is used to instruct the target user equipment to reset a network connection status;
the receiving unit is further configured to receive an attach request Attach Request sent by the target user equipment; and
the sending unit is further configured to send an attach reject Attach Reject to the target user equipment, where the attach reject carries the preset cause value;

With reference to the first aspect or any of the preceding manners, in a fifth implementation manner,
the sending unit is further configured to: when the target user equipment is in an Idle state, send a Paging message to the target user equipment by using a base station;
the receiving unit is further configured to receive a service request Service Request sent by the target user equipment;
the sending unit is further configured to send a Detach Request to the target user equipment; and
the receiving unit is further configured to receive a detach accept Detach Accept sent by the target user equipment.

With reference to the first aspect or any of the preceding manners, in a sixth implementation manner, the sending unit is further configured to send a detach request to the target user equipment, where the detach request carries a user identifier field IMSI detach;
the receiving unit is further configured to receive a tracking area update request Tracking Area Update Request sent by the target user equipment; and
the sending unit is further configured to send a tracking area update reject response Tracking Area Update Reject to the target user equipment, where the tracking area update reject response carries the preset cause value.

With reference to the first aspect or any of the preceding manners, in a seventh implementation manner, The network access apparatus according to any of the preceding claims, where the preset cause value is a reselect GERAN/UTRAN indication Reselect GERAN/UTRAN Indication.

In a second aspect, a network access method is provided, where the method includes:
determining, by a network access apparatus, a user equipment as a ready-to-switch-network user equipment according to an IMS function support status of the user equipment UE when registration in a circuit switched domain fails,, where the IMS function support status is used to indicate whether the user equipment supports IMS voice;
determining, by the network access apparatus, the ready-to-switch-network user equipment as a target user equipment according to a communication configuration parameter of the ready-to-switch-network user equipment, where the communication configuration parameter is used to indicate a preferred service type of the ready-to-switch-network user equipment; and
sending, by the network access apparatus, a network switch indication carrying a preset cause value to the target user equipment, where the network switch indication is used to instruct the target user equipment to access a voice service access network;
where the , determining a ready-to-switch-network user equipment according to an IMS function support status of a user equipment UE when registration in a circuit switched domain fails includes:
   when registration in the circuit switched domain fails, if the user equipment supports an IMS function and does not establish an IMS bearer in a preset period, determining the user equipment as a ready-to-switch-network user equipment;
   where the determining a target user equipment according to a communication configuration parameter of the ready-to-switch-network user equipment specifically includes:
      acquiring the communication configuration parameter of the ready-to-switch-network user equipment; and
      if the communication configuration parameter is voice centric Voice Centric, determining the ready-to-switch-network user equipment as a target user equipment.

With reference to the second aspect, in a first implementation manner, the sending a network switch indication carrying a preset cause value to the target user equipment specifically includes:
when the target user equipment is in Connect state, sending a Detach Request to the target user equipment by using a base station, where the detach request carries the preset cause value; or
receiving a tracking area update request Tracking Area Update Request sent by the target user equipment; and
sending a tracking area update reject response Tracking Area Update Reject to the target user equipment, where the tracking area update reject response carries the preset cause value.

With reference to the second aspect or any of the preceding manners, in a second implementation manner, before the sending a network switch indication carrying a preset cause value to the target user equipment, the method further includes:
when the target user equipment is in an Idle state, sending Paging signaling to the target user equipment by using a base station;
receiving a service request Service Request that is sent by the target user equipment according to the Paging signaling; and
determining, according to the service request, that the target user equipment is in a connect state.

With reference to the second aspect or any of the preceding manners, in a third implementation manner, the sending a network switch indication carrying a preset cause value to the target user equipment specifically includes:
when the target user equipment is in Connect state, sending a Detach Request to the target user equipment;
receiving an attach request Attach Request sent by the target user equipment; and
sending Attach Reject Attach Reject to the target user equipment, where the attach reject carries the preset cause value.

With reference to the second aspect or any of the preceding manners, in a fourth implementation manner, when the target user equipment is in an Idle state, sending a Paging message to the target user equipment by using a base station, where the paging message is used to instruct the target user equipment to reset a network connection status;
receiving an attach request Attach Request sent by the target user equipment; and
sending Attach Reject Attach Reject to the target user equipment, where the attach reject carries the preset cause value;

With reference to the second aspect or any of the preceding manners, in a fifth implementation manner,
when the target user equipment is in an Idle state, sending a Paging message to the target user equipment by using a base station;
receiving a service request Service Request sent by the target user equipment;
sending a Detach Request to the target user equipment; and
receiving a Detach Accept Detach Accept sent by the target user equipment.

With reference to the second aspect or any of the preceding manners, in a sixth implementation manner, where the sending a network switch indication carrying a preset cause value to the target user equipment specifically includes:
sending a detach request to the target user equipment, where the detach request carries a user identifier field IMSI detach;
receiving a tracking area update request Tracking Area Update Request sent by the target user equipment; and
sending a tracking area update reject response Tracking Area Update Reject to the target user equipment, where the tracking area update reject response carries the preset cause value.

According to the network access method and apparatus provided by the present invention, when registration in a circuit switched domain fails, a ready-to-switch-network user equipment can be determined according to an IMS function support status of a user equipment UE, and then a target user equipment can be determined according to a communication configuration parameter of the ready-to-switch-network user equipment; and a network switch indication carrying a preset cause value is sent to the target user equipment. In the prior art, when a UE fails to perform registration in a circuit switched domain, a network side returns "registration in CS domain failed" and prompts the UE that the network side supports a VoLTE technology. Because an underlying chip of the UE supports the VoLTE technology, the UE does not reselect a GERAN/UTRAN network, and the UE continues to camp on an LTE network (E-UTRAN) and prepares to implement the VoLTE technology, which causes unavailability of a voice service. Alternatively, because the UE cannot implement the VoLTE technology, a voice bearer channel for performing voice service data transmission cannot be established in an LTE network, which causes unavailability of a voice service of the UE. In the present invention, a network side can determine whether switching to implementation manner of the second aspect is further provided, and in the seventh possible implementation manner of the second aspect, the preset cause value is a reselect GERAN/UTRAN indication Reselect GERAN/UTRAN Indication.

According to a third aspect, the present invention further provides a network access method, where the method includes:
when registration in a circuit switched domain fails, determining a ready-to-switch-network user equipment according to an IMS function support status of a user equipment UE, where the IMS function support status is used to indicate whether the user equipment supports IMS voice;
determining a target user equipment according to a communication configuration parameter of the ready-to-switch-network user equipment, where the communication configuration parameter is used to indicate a preferred service type of the ready-to-switch-network user equipment; and
sending a network switch indication carrying a preset cause value to the target user equipment, where the network switch indication is used to instruct the target user equipment to access a voice service access network.

With reference to the third aspect, in a first possible implementation manner of the third aspect, the when registration in a circuit switched domain fails, determining a ready-to-switch-network user equipment according to an IMS function support status of a user equipment UE specifically includes:
when registration in the circuit switched domain fails, if the user equipment supports an IMS function and does not establish an IMS bearer in a preset period, determining the user equipment as a ready-to-switch-network user equipment; or
when registration in the circuit switched domain fails, if the user equipment does not support an IMS function, determining the user equipment as a ready-to-switch-network user equipment.

With reference to the third aspect, in a second possible implementation manner of the third aspect, the determining a target user equipment according to a communication configuration parameter of the ready-to-switch-network user equipment specifically includes:
acquiring the communication configuration parameter of the ready-to-switch-network user equipment; and
if the communication configuration parameter is voice centric Voice Centric, determining the ready-to-switch-network user equipment as a target device.

With reference to the third aspect, in a third possible implementation manner of the third aspect, the sending a network switch indication carrying a preset cause value to the target user equipment, specifically includes:
when the target user equipment is in Connect state, sending a detach request Detach Request to the target user equipment by using a base station, where the detach request carries the preset cause value; or
receiving a tracking area update request Tracking Area Update Request sent by the target user equipment; and
sending a tracking area update reject response Tracking Area Update Reject to the target user equipment, where the tracking area update reject response carries the preset cause value.

With reference to the third aspect, in the third possible implementation manner of the third aspect, a fourth possible implementation manner of the third aspect is further provided, and in the fourth possible implementation manner of the third aspect, before the sending a network switch indication carrying a preset cause value to the target user equipment, the method further includes:
when the target user equipment is in an Idle state, sending Paging signaling to the target user equipment by using a base station;
receiving a service request Service Request that is sent by the target user equipment according to the Paging signaling; and
determining, according to the service request, that the target user equipment is in a connect state.

With reference to the third aspect, in the third possible implementation manner of the third aspect, a fifth possible implementation manner of the third aspect is further provided, and in the fifth possible implementation manner of the third aspect, the sending a network switch indication carrying a preset cause value to the target user equipment specifically includes:
when the target user equipment is in Connect state, sending a detach request Detach Request to the target user equipment;
receiving an attach request Attach Request sent by the target user equipment; and
sending Attach Reject Attach Reject to the target user equipment, where the attach reject carries the preset cause value;
alternatively, when the target user equipment is in an Idle state, sending a Paging message to the target user equipment by using a base station, where the paging message is used to instruct the target user equipment to reset a network connection status;
receiving an attach request Attach Request sent by the target user equipment; and
sending Attach Reject Attach Reject to the target user equipment, where the attach reject carries the preset cause value;
alternatively, when the target user equipment is in an Idle state, sending a Paging message to the target user equipment by using a base station;
receiving a service request Service Request sent by the target user equipment;
sending a detach request Detach Request to the target user equipment; and
receiving a Detach Accept Detach Accept sent by the target user equipment.

With reference to the third aspect, in the third possible implementation manner of the third aspect, a sixth possible implementation manner of the third aspect is further provided, and in the sixth possible implementation manner of the third aspect, the sending a network switch indication carrying a preset cause value to the target user equipment specifically includes:
sending a detach request to the target user equipment, where the detach request carries a user identifier field IMSI detach;
receiving a tracking area update request Tracking Area Update Request sent by the target user equipment; and
sending a tracking area update reject response Tracking Area Update Reject to the target user equipment, where the tracking area update reject response carries the preset cause value.

With reference to the third aspect, in the third aspect or in the first, second, third, fourth, fifth, or sixth possible implementation manner of the third aspect, a seventh possible implementation manner of the third aspect is further provided, and in the seventh possible implementation manner of the third aspect, the preset cause value is a reselect GERAN/UTRAN indication Reselect GERAN/UTRAN Indication.

According to the network access method and apparatus provided by the present invention, when registration in a circuit switched domain fails, a ready-to-switch-network user equipment can be determined according to an IMS function support status of a user equipment UE, and then a target user equipment can be determined according to a communication configuration parameter of the ready-to-switch-network user equipment; and a network switch indication carrying a preset cause value is sent to the target user equipment. In the prior art, when a UE fails to perform registration in a circuit switched domain, a network side returns "registration in CS domain failed" and prompts the UE that the network side supports a VoLTE technology. Because an underlying chip of the UE supports the VoLTE technology, the UE does not reselect a GERAN/UTRAN network, and the UE continues to camp on an LTE network (E-UTRAN) and prepares to implement the VoLTE technology, which causes unavailability of a voice service. Alternatively, because the UE cannot implement the VoLTE technology, a voice bearer channel for performing voice service data transmission cannot be established in an LTE network, which causes unavailability of a voice service of the UE. In the present invention, a network side can determine whether switching to another network is needed. When a UE fails to perform registration in a circuit switched domain, the network side determines the UE as a ready-to-switch-network UE, then determines the ready-to-switch-network UE as a target UE according to a preferred service type (voice centric or data centric) of the UE, and finally sends a network switch indication carrying a preset cause value to the target UE, so that the UE switches to another network, that is, connects to a GSM/UMTS network, according to the network switch indication, and the UE can complete registration in a circuit switched domain of the GSM/UMTS network, thereby ensuring that a voice service of the UE can be normally used.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a first network access apparatus according to an embodiment of the present invention;
FIG. 2 is a schematic structural diagram of a second network access apparatus according to an embodiment of the present invention;
FIG. 3 is a schematic structural diagram of a third network access apparatus according to an embodiment of the present invention;
FIG. 4 is a schematic structural diagram of a fourth network access apparatus according to an embodiment of the present invention;
FIG. 5 is a schematic structural diagram of a fifth network access apparatus according to an embodiment of the present invention;
FIG. 6 is a flowchart of a first network access method according to an embodiment of the present invention;
FIG. 7 is a flowchart of a second network access method according to an embodiment of the present invention;
FIG. 8 is a flowchart of a third network access method according to an embodiment of the present invention;
FIG. 9 is a flowchart of Scenario 1 according to an embodiment of the present invention;
FIG. 10 is a flowchart of Scenario 2 according to an embodiment of the present invention;
FIG. 11 is a flowchart of a fourth network access method according to an embodiment of the present invention;
FIG. 12 is a flowchart of Scenario 3 according to an embodiment of the present invention;
FIG. 13 is a flowchart of Scenario 4 according to an embodiment of the present invention;
FIG. 14 is a flowchart of Scenario 5 according to an embodiment of the present invention;
FIG. 15 is a flowchart of Scenario 6 according to an embodiment of the present invention; and
FIG. 16 is a flowchart of a fifth network access method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

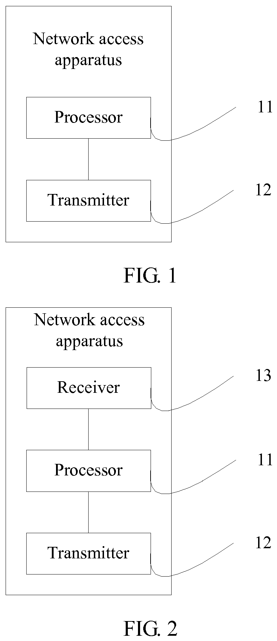

An embodiment of the present invention provides a network access apparatus, where the apparatus is disposed in a network server. As shown in FIG. 1, the apparatus includes a processor 11 and a transmitter 12, where the transmitter 12 is connected to the processor 11.

The processor 11 is configured to: when registration in a circuit switched domain fails, determine a ready-to-switch-network user equipment according to an IMS function support status of a user equipment UE, where the IMS function support status is used to indicate whether the user equipment supports IMS voice; and
determine a target user equipment according to a communication configuration parameter of the ready-to-switch-network user equipment, where the communication configuration parameter is used to indicate a preferred service type of the ready-to-switch-network user equipment.

The transmitter 12 is configured to send a network switch indication carrying a preset cause value to the target user equipment determined by the processor 11, where the network switch indication is used to instruct the target user equipment to access a voice service access network.

Further, the processor 11 is further configured to:
when registration in the circuit switched domain fails, if the user equipment supports an IMS function and does not establish an IMS bearer in a preset period, determine the user equipment as a ready-to-switch-network user equipment; or
when registration in the circuit switched domain fails, if the user equipment does not support an IMS function, determine the user equipment as a ready-to-switch-network user equipment.

Further, the processor 11 is further configured to:
acquire the communication configuration parameter of the ready-to-switch-network user equipment; and
if the communication configuration parameter is voice centric Voice Centric, determine the ready-to-switch-network user equipment as a target device.

Further, the transmitter 12 is further configured to: when the target user equipment is in Connect state, send a detach request Detach Request to the target user equipment by using a base station, where the detach request carries the preset cause value.

Alternatively,
as shown in FIG. 2, the apparatus further includes a receiver 13, and the receiver 13 is connected to the processor 11. The processor 11 instructs the receiver 13 to receive information, and the processor 11 instructs the transmitter 12 to send information.

The receiver 13 is configured to receive a tracking area update request Tracking Area Update Request sent by the target user equipment.

The transmitter 12 is further configured to send a tracking area update reject response Tracking Area Update Reject to the target user equipment, where the tracking area update reject response carries the preset cause value.

Further, the transmitter 12 is further configured to: when the target user equipment is in an Idle state, send Paging signaling to the target user equipment by using a base station.

The receiver 13 is further configured to receive a service request Service Request that is sent by the target user equipment according to the Paging signaling.

The processor 11 is further configured to determine, according to the service request, that the target user equipment is in a connect state.

Further, the transmitter 12 is further configured to: when the target user equipment is in Connect state, send a detach request Detach Request to the target user equipment.

The receiver 13 is further configured to receive an attach request Attach Request sent by the target user equipment.

The transmitter 12 is further configured to send an attach reject Attach Reject to the target user equipment, where the attach reject carries the preset cause value.

Alternatively,
the transmitter 12 is further configured to: when the target user equipment is in an Idle state, send a Paging message to the target user equipment by using a base station, where the paging message is used to instruct the target user equipment to reset a network connection status.

The receiver 13 is further configured to receive an attach request Attach Request sent by the target user equipment.

The transmitter 12 is further configured to send an attach reject Attach Reject to the target user equipment, where the attach reject carries the preset cause value.

Alternatively,
the transmitter 12 is further configured to: when the target user equipment is in an Idle state, send a Paging message to the target user equipment by using a base station.

The receiver 13 is further configured to receive a service request Service Request sent by the target user equipment.

The transmitter 12 is further configured to send a detach request Detach Request to the target user equipment.

The receiver 13 is further configured to receive a detach accept Detach Accept sent by the target user equipment.

Further, the transmitter 12 is further configured to send a detach request to the target user equipment, where the detach request carries a user identifier field IMSI detach.

The receiver 13 is further configured to receive a tracking area update request Tracking Area Update Request sent by the target user equipment.

The transmitter 12 is further configured to send a tracking area update reject response Tracking Area Update Reject to the target user equipment, where the tracking area update reject response carries the preset cause value.

Further, the preset cause value is a reselect GERAN/UTRAN indication Reselect GERAN/UTRAN Indication.

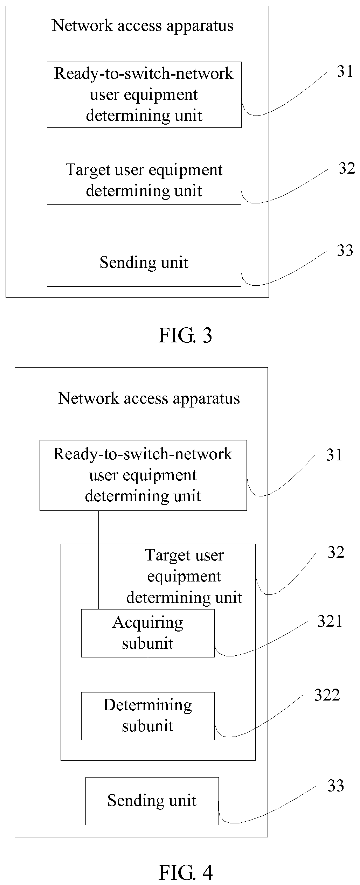

An embodiment of the present invention provides a network access apparatus. As shown in FIG. 3, the apparatus includes a ready-to-switch-network user equipment determining unit 31, a target user equipment determining unit 32, and a sending unit 33, which are connected in sequence.

The ready-to-switch-network user equipment determining unit 31 is configured to: when registration in a circuit switched domain fails, determine a ready-to-switch-network user equipment according to an IMS function support status of a user equipment UE, where the IMS function support status is used to indicate whether the user equipment supports IMS voice.

The target user equipment determining unit 32 is configured to determine a target user equipment according to a communication configuration parameter of the ready-to-switch-network user equipment determined by the ready-to-switch-network user equipment determining unit 31, where the communication configuration parameter is used to indicate a preferred service type of the ready-to-switch-network user equipment.

The sending unit 33 is configured to send a network switch indication carrying a preset cause value to the target user equipment determined by the target user equipment unit 32, where the network switch indication is used to instruct the target user equipment to access a voice service access network.

Further, the ready-to-switch-network user equipment determining unit 31 is further configured to:
when registration in the circuit switched domain fails, if the user equipment supports an IMS function and does not establish an IMS bearer in a preset period, determine the user equipment as a ready-to-switch-network user equipment; or
when registration in the circuit switched domain fails, if the user equipment does not support an IMS function, determine the user equipment as a ready-to-switch-network user equipment.

Further, as shown in FIG. 4, the target user equipment determining unit 32 specifically includes:
an acquiring subunit 321, configured to acquire the communication configuration parameter of the ready-to-switch-network user equipment determined by the ready-to-switch-network user equipment determining unit 31; and
a determining subunit 322, configured to: when the communication configuration parameter acquired by the acquiring subunit 321 is voice centric Voice Centric, determine the ready-to-switch-network user equipment as a target device.

Further, the sending unit 33 is further configured to: when the target user equipment is in Connect state, send a detach request Detach Request to the target user equipment by using a base station, where the detach request carries the preset cause value.

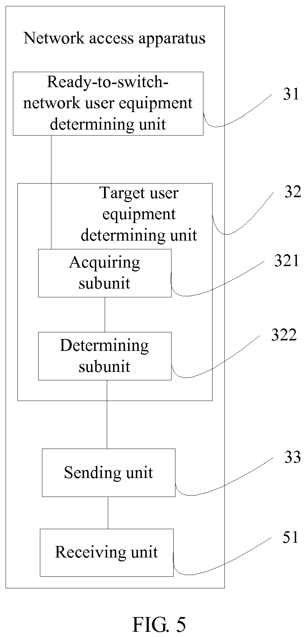

Alternatively,
as shown in FIG. 5, the apparatus further includes a receiving unit 51, where the receiving unit 51 is configured to receive a tracking area update request Tracking Area Update Request sent by the target user equipment.

The sending unit 33 is further configured to send a tracking area update reject response Tracking Area Update Reject to the target user equipment, where the tracking area update reject response carries the preset cause value.

Further, the sending unit 33 is further configured to: when the target user equipment is in an Idle state, send Paging signaling to the target user equipment by using a base station.

The receiving unit 51 is further configured to receive a service request Service Request that is sent by the target user equipment according to the Paging signaling.

The apparatus further includes a connect state determining unit, where the connect state determining unit is configured to determine, according to the service request received by the receiving unit 51, that the target user equipment is in a connect state.

Further, the sending unit 33 is further configured to: when the target user equipment is in Connect state, send a detach request Detach Request to the target user equipment.

The receiving unit 51 is further configured to receive an attach request Attach Request sent by the target user equipment.

The sending unit 33 is further configured to send an attach reject Attach Reject to the target user equipment, where the attach reject carries the preset cause value.

Alternatively,
the sending unit 33 is further configured to: when the target user equipment is in an Idle state, send a Paging message to the target user equipment by using a base station, where the paging message is used to instruct the target user equipment to reset a network connection status.

The receiving unit 51 is further configured to receive an attach request Attach Request sent by the target user equipment.

The sending unit 33 is further configured to send an attach reject Attach Reject to the target user equipment, where the attach reject carries the preset cause value.

Alternatively,
the sending unit 33 is further configured to: when the target user equipment is in an Idle state, send a Paging message to the target user equipment by using a base station.

The receiving unit 51 is further configured to receive a service request Service Request sent by the target user equipment.

The sending unit 33 is further configured to send a detach request Detach Request to the target user equipment.
The receiving unit 51 is further configured to receive a detach accept Detach Accept sent by the target user equipment.

Further, the sending unit 33 is further configured to send a detach request to the target user equipment, where the detach request carries a user identifier field IMSI detach.

The receiving unit 51 is further configured to receive a tracking area update request Tracking Area Update Request sent by the target user equipment.

The sending unit 33 is further configured to send a tracking area update reject response Tracking Area Update Reject to the target user equipment, where the tracking area update reject response carries the preset cause value.

Further, the preset cause value is a reselect GERAN/UTRAN indication Reselect GERAN/UTRAN Indication.

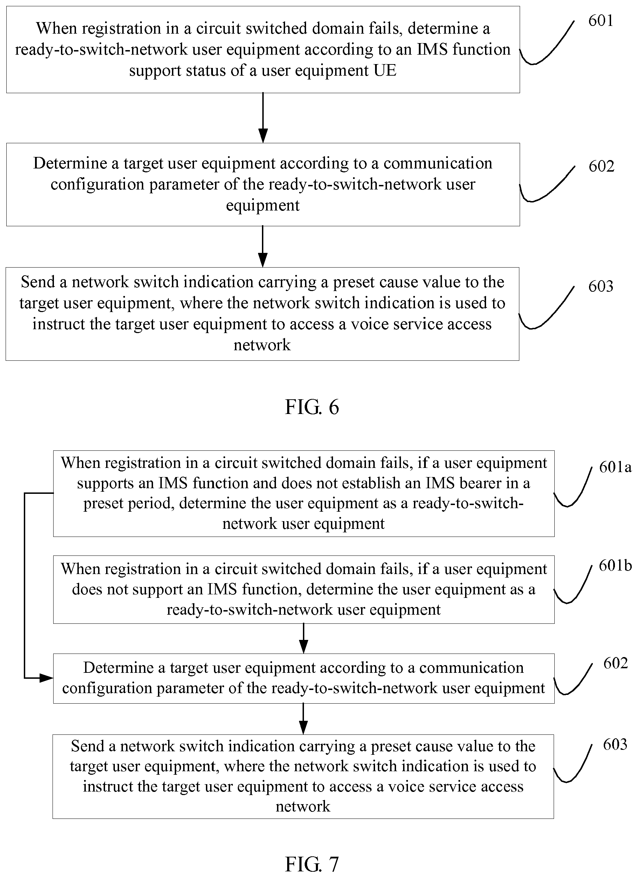

An embodiment of the present invention provides a network access method. As shown in FIG. 6, the method is applied to a network server, where the network server is, for example, a mobility management entity (Mobility Management Entity, MME for short). The method is executed in the foregoing apparatus, and the method includes:
Step 601: When registration in a circuit switched domain fails, determine a ready-to-switch-network user equipment according to an IMS function support status of a user equipment UE.

The circuit switched domain is a circuit switched domain in a GSM/UMTS network, and this circuit switched domain is used to provide a voice service for a user equipment. The IMS function support status is used to indicate whether the user equipment supports IMS voice. If the user equipment supports IMS voice, the user equipment is capable of establishing a voice service call bearer in an LTE network by using an IMS network, thereby implementing a voice call in the LTE network.

Step 602: Determine a target user equipment according to a communication configuration parameter of the ready-to-switch-network user equipment.

The communication configuration parameter is used to indicate a preferred service type of the ready-to-switch-network user equipment. In the 3GPP protocol, there are two preferred service types of a user equipment: voice centric (Voice centric) and data centric (Data centric). Voice centric (Voice centric) means that a voice service is preferred, and a data service such as Internet access is also allowed; and generally, a device using voice centric as a preferred service type is a mobile phone. A service for a voice centric user equipment is defined as ensuring that a voice service is always available. If a UE cannot acquire a CSFB voice function or cannot acquire an IMS voice function in an LTE network due to reasons of the UE or a network, the UE reselects a GERAN/UTRAN to access, and after the reselection, the UE acquires a voice service directly in a CS domain of the GERAN/UTRAN network. For a data centric user equipment, if a voice service cannot be acquired, the UE continues to camp on the LTE network, so as to ensure that a data service is always available.

Step 603: Send a network switch indication carrying a preset cause value to the target user equipment, where the network switch indication is used to instruct the target user equipment to access a voice service access network.

The preset cause value is a reselect GERAN/UTRAN indication (Reselect GERAN/UTRAN Indication). As stipulated in the existing protocol, when a UE receives a reselect GERAN/UTRAN indication, the UE disconnects a connection from a current network, and re-establishes a connection with a GERAN/UTRAN network.

According to the network access method provided by the present invention, when registration in a circuit switched domain fails, a ready-to-switch-network user equipment can be determined according to an IMS function support status of a user equipment UE, and then a target user equipment can be determined according to a communication configuration parameter of the ready-to-switch-network user equipment; and a network switch indication carrying a preset cause value is sent to the target user equipment. In the prior art, when a UE fails to perform registration in a circuit switched domain, a network side returns "registration in CS domain failed" and prompts the UE that the network side supports a VoLTE technology. Because an underlying chip of the UE supports the VoLTE technology, the UE does not reselect a GERAN/UTRAN network, and the UE continues to camp on an LTE network (E-UTRAN) and prepares to implement the VoLTE technology, which causes unavailability of a voice service. Alternatively, because the UE cannot implement the VoLTE technology, a voice bearer channel for performing voice service data transmission cannot be established in an LTE network, which causes unavailability of a voice service of the UE. In the present invention, a network side can determine whether switching to another network is needed. When a UE fails to perform registration in a circuit switched domain, the network side determines the UE as a ready-to-switch-network UE, then determines the ready-to-switch-network UE as a target UE according to a preferred service type (voice centric or data centric) of the UE, and finally sends a network switch indication carrying a preset cause value to the target UE, so that the UE switches to another network, that is, connects to a GSM/UMTS network, according to the network switch indication, and the UE can complete registration in a circuit switched domain of the GSM/UMTS network, thereby ensuring that a voice service of the UE can be normally used.

An embodiment of the present invention further provides a network access method. As a specific description of the method shown in FIG. 6, as shown in FIG. 7, step 601 of when registration in a circuit switched domain fails, determining a ready-to-switch-network user equipment according to an IMS function support status of a user equipment UE may be implemented in the following manner:
Step 601a: When registration in the circuit switched domain fails, if the user equipment supports an IMS function and does not establish an IMS bearer in a preset period, determine the user equipment as a ready-to-switch-network user equipment.
Step 601 may also be implemented in another manner:
Step 601b: When registration in the circuit switched domain fails, if the user equipment does not support an IMS function, determine the user equipment as a ready-to-switch-network user equipment.

Parameters used for determining whether a user equipment is a ready-to-switch-network user equipment are listed in Table 1.

| IMS function support status | IMS bearer establishment status |
|---|---|
| Supported | IMS bearer not established in a preset period |
| Not supported | None |

When a user equipment supports an IMS function and does not establish an IMS bearer in a preset period, or when a user equipment does not support an IMS function, the user equipment is determined as a ready-to-switch-network user equipment.

According to the network access method provided by this embodiment of the present invention, a ready-to-switch-network user equipment can be determined according to an IMS function support status and an IMS bearer establishment status, thereby ensuring that a server can determine a user equipment that needs to switch to another network.

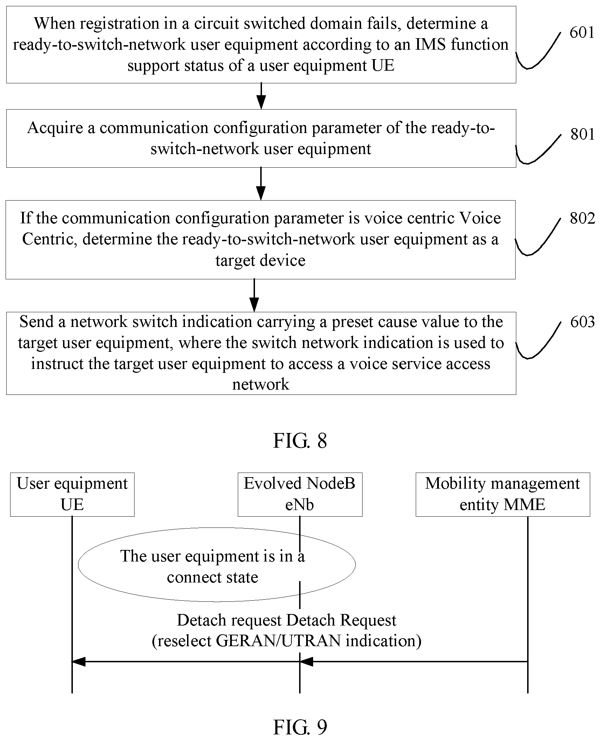

An embodiment of the present invention further provides a network access method. As a specific description of the method shown in FIG. 6, as shown in FIG. 8, step 602 of determining a target user equipment according to a communication configuration parameter of the ready-to-switch-network user equipment may be implemented in the following manners:
Step 801: Acquire the communication configuration parameter of the ready-to-switch-network user equipment.

The communication configuration parameter is used to indicate a preferred service type of a user equipment, such as voice centric Voice Centric or data centric Data Centric.

Step 802: If the communication configuration parameter is voice centric Voice Centric, determine the ready-to-switch-network user equipment as a target device.

When the configuration parameter of the ready-to-switch-network user equipment is voice centric, it needs to be ensured that a voice service of the ready-to-switch-network user equipment remains normal, and therefore the ready-to-switch-network user equipment is determined as a target device.

If the configuration parameter of the ready-to-switch-network user equipment is data centric, it needs to be ensured that a data service (such as a mobile network data transmission service) of the ready-to-switch-network user equipment remains normal, and the ready-to-switch-network user equipment does not need to be determined as a target device.

According to the network access method provided by this embodiment of the present invention, a target device can be determined from ready-to-switch-network user equipments according to a configuration parameter, thereby improving network access accuracy.

An embodiment of the present invention further provides a network access method. As a specific description of the method shown in FIG. 6, step 603 of sending a network switch indication carrying a preset cause value to the target user equipment may be implemented in the following manner:
1) When the target user equipment is in Connect state, send a detach request Detach Request to the target user equipment by using a base station, where the detach request carries the preset cause value.

Alternatively,
2.1) Receive a tracking area update request Tracking Area Update Request sent by the target user equipment; and
2.2) Send a tracking area update reject response Tracking Area Update Reject to the target user equipment, where the tracking area update reject response carries the preset cause value.

### Scenario 1:

As shown in FIG. 9, when a user equipment is in a connect state:
Step 901: An MME sends a detach request Detach Request to the UE by using a base station eNB, where the detach request carries a reselect GERAN/UTRAN indication Reselect GERAN/UTRAN Indication.

### Scenario 2:

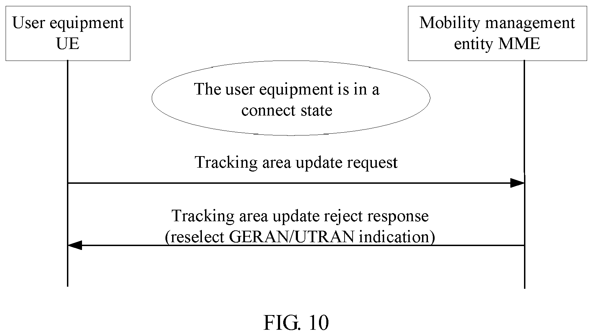

As shown in FIG. 10, when a user equipment is in a connect state:
Step 1001: The UE sends a tracking area update request Tracking Area Update Request to an MME, and the MME receives the tracking area update request.
Step 1002: The MME sends a tracking area update reject response Tracking Area Update Reject to the UE, where the tracking area update reject response carries a reselect GERAN/UTRAN indication Reselect GERAN/UTRAN Indication.

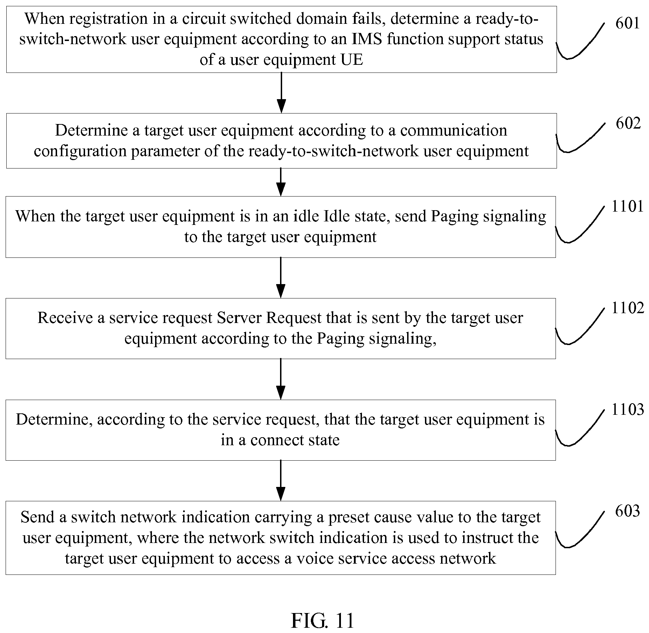

An embodiment of the present invention further provides a network access method. As a further description of the method shown in FIG. 6, as shown in FIG. 11, before step 603 of sending a network switch indication carrying a preset cause value to the target user equipment, the method further includes:
Step 1101: When the target user equipment is in an Idle state, send Paging signaling to the target user equipment.

The target user equipment enters a connect state after receiving the Paging signaling.

Step 1102: Receive a service request Service Request that is sent by the target user equipment according to the Paging signaling.

Step 1103: Determine, according to the service request, that the target user equipment is in a connect state.

### Scenario 3:

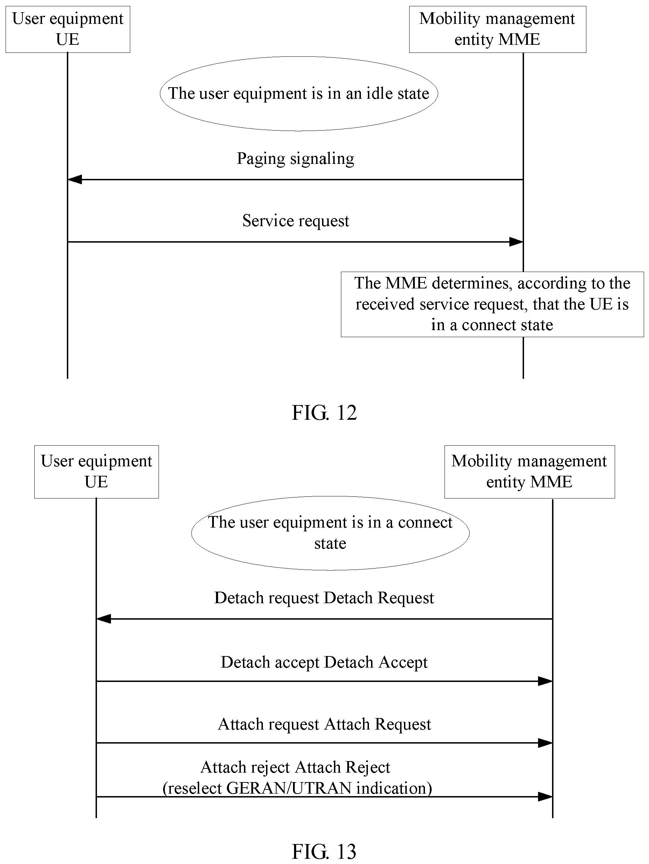

As shown in FIG. 12, when a user equipment is in an Idle state:
Step 1201: An MME sends Paging signaling to the UE by using a base station eNB.
Step 1202: The UE sends a service request Service Request to the MME.
Step 1203: The MME determines that the UE is in a connect state according to the received service request.

According to the network access method provided by this embodiment of the present invention, an MME can instruct, by using paging signaling, a user to switch from an IDLE state to a connect state.

Further, when a UE is in an idle state, a paging request is not delivered, and the UE is instructed to reselect a GERAN/UTRAN network only after the UE re-initiates a service request or a periodic TAU request, thereby reducing overheads for delivering paging by a network side.

An embodiment of the present invention further provides a network access method. As a specific description of the method shown in FIG. 6, step 603 of sending a network switch indication carrying a preset cause value to the target user equipment may be implemented in the following manners:
1) When the target user equipment is in Connect state, send a detach request Detach Request to the target user equipment.
2) Receive an attach request Attach Request sent by the target user equipment.
3) Send an attach reject Attach Reject to the target user equipment, where the attach reject carries the preset cause value.

### Scenario 4:

As shown in FIG. 13, when a user equipment is in a connect state:
Step 1301: An MME sends a detach request Detach Request to the UE, where the detach request carries a relocation request reattach required.
Step 1302: The UE sends a detach accept Detach Accept to the MME as a response.
Step 1303: The UE sends an attach request Attach Request to the MME.
Step 1304: The MME sends an attach reject Attach Reject to the UE, where the attach reject carries a reselect GERAN/UTRAN indication Reselect GERAN/UTRAN Indication.

Alternatively, step 603 of sending a network switch indication carrying a preset cause value to the target user equipment may also be implemented in the following manners:
1) When the target user equipment is in an Idle state, send a Paging message to the target user equipment, where the paging message is used to instruct the target user equipment to reset a network connection status.
2) Receive an attach request Attach Request sent by the target user equipment.
3) Send an attach reject Attach Reject to the target user equipment, where the attach reject carries the preset cause value.

### Scenario 5:

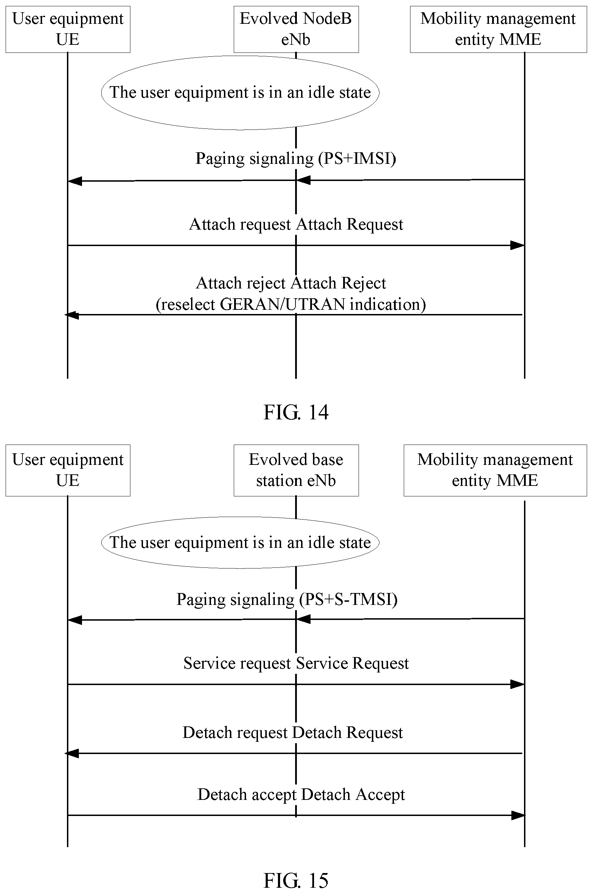

As shown in FIG. 14, when a user equipment is in an idle state:
Step 1401: An MME sends a Paging message to the target user equipment by using a base station eNB, where a paging identifier carried by the paging message is PS+IMSI, so as to instruct the UE to clear current user status information before accessing a network by means of receiving a request Attach Request.
Step 1402: The UE sends an attach request Attach Request to the MME.
Step 1403: The MME sends an attach reject Attach Reject to the UE, where the attach reject carries a reselect GERAN/UTRAN indication Reselect GERAN/UTRAN Indication.

Alternatively, step 603 of sending a network switch indication carrying a preset cause value to the target user equipment may also be implemented in the following manner:
1) When the target user equipment is in an Idle state, send a Paging message to the target user equipment.
2) Receive a service request Service Request sent by the target user equipment.
3) Send a detach request Detach Request to the target user equipment.
4) Receive a detach accept Detach Accept sent by the target user equipment.

### Scenario 6:

As shown in FIG. 15, when a UE is in an Idle state:
Step 1501: An MME sends a Paging message to the UE by using a base station, The paging message is used to instruct the target user equipment to reset a network connection status. A paging identifier carried by the paging message is PS+S-TMSI, and is used to instruct the UE to access a network normally.
Step 1502: The UE sends a service request Service Request to the MME.
Step 1503: The MME sends a detach request Detach Request to the UE.
Step 1504: The UE sends a detach accept Detach Accept to the MME.

According to the network access method provided by this embodiment of the present invention, when a UE is in an idle state, different paging identifiers can be carried in paging messages, so as to enable the UE to access a network in manners corresponding to the paging identifiers.

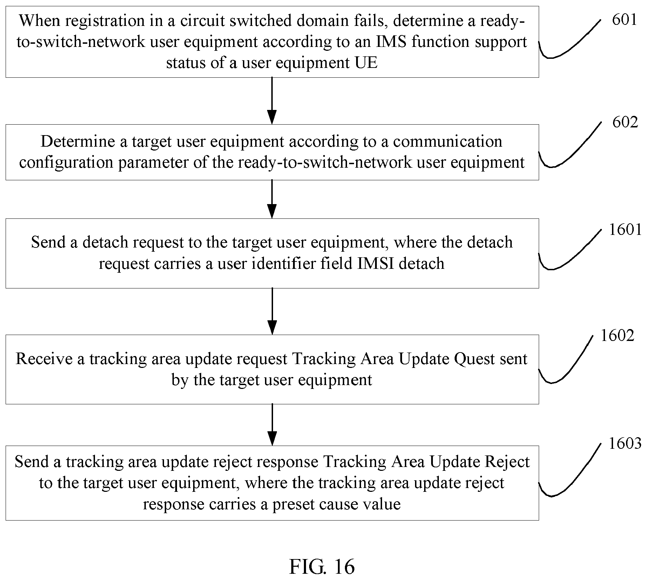

An embodiment of the present invention further provides a network access method. As a specific description of the method shown in FIG. 6, as shown in FIG. 16, step 603 of sending a network switch indication carrying a preset cause value to the target user equipment includes:
Step 1601: Send a detach request to the target user equipment, where the detach request carries a user identifier field IMSI detach.
Step 1602: Receive a tracking area update request Tracking Area Update Request sent by the target user equipment.
Step 1603: Send a tracking area update reject response Tracking Area Update Reject to the target user equipment, where the tracking area update reject response carries the preset cause value.

According to this embodiment of the present invention, a detach request is sent to the UE to enable the UE to perform a combined tracking area update, and then a reject is returned to the UE to instruct the UE to reselect a network. As stipulated in the protocol, a UE with a CSFB capability, if already registered as EPS Attach or SMS Only, returns a response by means of IMSI Detach. However, currently, during implementation, there exists a UE that does not comply with protocol specifications for implementation. According to this embodiment of the present invention, a detach request can be sent to a target user equipment, and after a TAU request sent by the target user equipment is received, a tracking area update reject response carrying a preset cause value can be sent to the target user equipment.

It should be noted that, in this embodiment of the present invention, the preset cause value is a reselect GERAN/UTRAN indication Reselect GERAN/UTRAN Indication.

It may be clearly understood by a person skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, reference may be made to a corresponding process in the foregoing method embodiments, and details are not described herein again.

## Claims

1. A network access apparatus, wherein the apparatus comprises:
a ready-to-switch-network user equipment determining unit (31), configured to: determine a user equipment as a ready-to-switch-network user equipment according to an IP Multimedia Subsystem, IMS, function support status of the user equipment, UE, when registration in a circuit switched domain fails, wherein the IMS function support status is used to indicate whether the user equipment supports IMS voice;
a target user equipment determining unit (32), configured to determine the ready-to-switch-network user equipment as a target user equipment according to a communication configuration parameter of the ready-to-switch-network user equipment, wherein the communication configuration parameter is used to indicate a preferred service type of the ready-to-switch-network user equipment; and
a sending unit (33), configured to send a network switch indication carrying a preset cause value to the target user equipment determined by the target user equipment determining unit, wherein the network switch indication is used to instruct the target user equipment to access a voice service access network;
wherein the ready-to-switch-network user equipment determining unit is further configured to:
when registration in the circuit switched domain fails, if the user equipment supports an IMS function and does not establish an IMS bearer in a preset period, determine the user equipment as a ready-to-switch-network user equipment;
wherein the target user equipment determining unit comprises:
an acquiring subunit (321), configured to acquire the communication configuration parameter of the ready-to-switch-network user equipment determined by the ready-to-switch-network user equipment determining unit; and
a determining subunit (322), configured to: when the communication configuration parameter acquired by the acquiring subunit is voice centric Voice Centric, determine the ready-to-switch-network user equipment as a target user equipment.

2. The network access apparatus according to claim 1, wherein
the sending unit is further configured to: when the target user equipment is in Connect state, send a Detach Request to the target user equipment by using a base station, wherein the detach request carries the preset cause value; or
the apparatus further comprises a receiving unit (51), wherein the receiving unit is configured to receive a tracking area update request Tracking Area Update Request sent by the target user equipment; and the sending unit is further configured to send a tracking area update reject response Tracking Area Update Reject to the target user equipment, wherein the tracking area update reject response carries the preset cause value.

3. The network access apparatus according to any of the preceding claims, wherein
the sending unit is further configured to: when the target user equipment is in an Idle state, send Paging signaling to the target user equipment by using a base station;
the receiving unit is further configured to receive a service request Service Request that is sent by the target user equipment according to the Paging signaling; and
the apparatus further comprises a connect state determining unit, wherein the connect state determining unit is configured to determine, according to the service request received by the receiving unit, that the target user equipment is in a connect state.

4. The network access apparatus according to any of the preceding claims, wherein
the sending unit is further configured to: when the target user equipment is in Connect state, send a Detach Request to the target user equipment;
the receiving unit is further configured to receive an attach request Attach Request sent by the target user equipment; and
the sending unit is further configured to send an attach reject Attach Reject to the target user equipment, wherein the attach reject carries the preset cause value.

5. The network access apparatus according to any of the preceding claims, wherein
the sending unit is further configured to: when the target user equipment is in an Idle state, send a Paging message to the target user equipment by using a base station, wherein the paging message is used to instruct the target user equipment to reset a network connection status;
the receiving unit is further configured to receive an attach request Attach Request sent by the target user equipment; and
the sending unit is further configured to send an attach reject Attach Reject to the target user equipment, wherein the attach reject carries the preset cause value.

6. The network access apparatus according to any of the preceding claims, wherein
the sending unit is further configured to: when the target user equipment is in an Idle state, send a Paging message to the target user equipment by using a base station;
the receiving unit is further configured to receive a service request Service Request sent by the target user equipment;
the sending unit is further configured to send a Detach Request to the target user equipment; and
the receiving unit is further configured to receive a detach accept Detach Accept sent by the target user equipment.

7. The network access apparatus according to any of the preceding claims, wherein
the sending unit is further configured to send a detach request to the target user equipment, wherein the detach request carries a user identifier field, International Mobile Subscriber Identity, IMSI, detach;
the receiving unit is further configured to receive a tracking area update request Tracking Area Update Request sent by the target user equipment; and
the sending unit is further configured to send a tracking area update reject response Tracking Area Update Reject to the target user equipment, wherein the tracking area update reject response carries the preset cause value.

8. The network access apparatus according to any of the preceding claims, wherein the preset cause value is a reselect Global System for Mobile Communications, GSM, Enhanced Data Rates for GSM Evolution, EDGE, Radio Access Network, GERAN or Universal Mobile Telecommunications System, UMTS, Terrestrial Radio Access Network, UTRAN, indication Reselect GERAN/UTRAN Indication.

9. A network access method, wherein the method comprises:
determining (601), by a network access apparatus, a user equipment as a ready-to-switch-network user equipment according to an IP Multimedia Subsystem, IMS, function support status of the user equipment, UE, when registration in a circuit switched domain fails, wherein the IMS function support status is used to indicate whether the user equipment supports IMS voice;
determining (602), by the network access apparatus, the ready-to-switch-network user equipment as a target user equipment according to a communication configuration parameter of the ready-to-switch-network user equipment, wherein the communication configuration parameter is used to indicate a preferred service type of the ready-to-switch-network user equipment; and
sending (603), by the network access apparatus, a network switch indication carrying a preset cause value to the target user equipment, wherein the network switch indication is used to instruct the target user equipment to access a voice service access network;
wherein the determining a ready-to-switch-network user equipment according to an IMS function support status of a user equipment UE when registration in a circuit switched domain fails comprises:
when registration in the circuit switched domain fails, if the user equipment supports an IMS function and does not establish an IMS bearer in a preset period, determining the user equipment as a ready-to-switch-network user equipment;
wherein the determining a target user equipment according to a communication configuration parameter of the ready-to-switch-network user equipment specifically comprises:
acquiring (801) the communication configuration parameter of the ready-to-switch-network user equipment; and
if the communication configuration parameter is voice centric Voice Centric, determining (802) the ready-to-switch-network user equipment as a target user equipment.

10. The network access method according to claim 9, wherein the sending a network switch indication carrying a preset cause value to the target user equipment specifically comprises:
when the target user equipment is in Connect state, sending a Detach Request to the target user equipment by using a base station, wherein the detach request carries the preset cause value; or
receiving a tracking area update request Tracking Area Update Request sent by the target user equipment; and
sending a tracking area update reject response Tracking Area Update Reject to the target user equipment, wherein the tracking area update reject response carries the preset cause value.

11. The network access method according to any of the preceding claims, wherein before the sending a network switch indication carrying a preset cause value to the target user equipment, the method further comprises:
when the target user equipment is in an Idle state, sending Paging signaling to the target user equipment by using a base station;
receiving a service request Service Request that is sent by the target user equipment according to the Paging signaling; and
determining, according to the service request, that the target user equipment is in a connect state.

12. The network access method according to any of the preceding claims, wherein the sending a network switch indication carrying a preset cause value to the target user equipment specifically comprises:
when the target user equipment is in Connect state, sending a Detach Request to the target user equipment;
receiving an attach request Attach Request sent by the target user equipment; and
sending Attach Reject Attach Reject to the target user equipment, wherein the attach reject carries the preset cause value.

13. The network access method according to any of the preceding claims, wherein
when the target user equipment is in an Idle state, sending a Paging message to the target user equipment by using a base station, wherein the paging message is used to instruct the target user equipment to reset a network connection status;
receiving an attach request Attach Request sent by the target user equipment; and
sending Attach Reject Attach Reject to the target user equipment, wherein the attach reject carries the preset cause value.

14. The network access method according to any of the preceding claims, wherein
when the target user equipment is in an Idle state, sending a Paging message to the target user equipment by using a base station;
receiving a service request Service Request sent by the target user equipment;
sending a Detach Request to the target user equipment; and
receiving a Detach Accept Detach Accept sent by the target user equipment.

15. The network access method according to any of the preceding claims, wherein the sending a network switch indication carrying a preset cause value to the target user equipment specifically comprises:
sending a detach request to the target user equipment, wherein the detach request carries a user identifier field International Mobile Subscriber Identity, IMSI, detach;
receiving a tracking area update request Tracking Area Update Request sent by the target user equipment; and
sending a tracking area update reject response Tracking Area Update Reject to the target user equipment, wherein the tracking area update reject response carries the preset cause value.

## Patentansprüche

1. Vorrichtung für Netzwerkzugang, wobei die Vorrichtung Folgendes umfasst:
eine Bestimmungseinheit (31) für netzwerkschaltbereites Benutzergerät, ausgelegt zum: Bestimmen eines Benutzergeräts als ein netzwerkschaltbereites Benutzergerät gemäß einem IMS-Funktionsunterstützungsstatus (IP Multimedia Subsystem, IP-Multimedia-Teilsystem) des Benutzergeräts (UE, User Equipment), wenn Registrierung in einer leitungsvermittelten Domäne fehlschlägt, wobei der IMS-Funktionsunterstützungsstatus verwendet wird, um anzuzeigen, ob das Benutzergerät IMS-Sprache unterstützt;
eine Zielbenutzergerät-Bestimmungseinheit (32), ausgelegt zum Bestimmen des netzwerkschaltbereiten Benutzergeräts als ein Zielbenutzergerät gemäß einem Kommunikationsauslegungsparameter des netzwerkschaltbereiten Benutzergeräts, wobei der Kommunikationsauslegungsparameter verwendet wird, um einen bevorzugten Diensttyp des netzwerkschaltbereiten Benutzergeräts anzuzeigen; und
eine Sendeeinheit (33), ausgelegt zum Senden einer Netzwerkschaltindikation, die einen voreingestellten Ursachenwert zum Zielbenutzergerät transportiert, das durch die Zielbenutzergerät-Bestimmungseinheit bestimmt wurde, wobei die Netzwerkschaltindikation verwendet wird, um das Zielbenutzergerät anzuweisen, auf ein Sprachdienstzugangsnetzwerk zuzugreifen;
wobei die Bestimmungseinheit für netzwerkschaltbereites Benutzergerät ferner ausgelegt ist zum:
wenn Registrierung in der leitungsvermittelten Domäne fehlschlägt, wenn das Benutzergerät eine IMS-Funktion unterstützt und keinen IMS-Träger in einer voreingestellten Periode errichtet, Bestimmen des Benutzergeräts als ein netzwerkschaltbereites Benutzergerät;
wobei die Zielbenutzergerät-Bestimmungseinheit Folgendes umfasst:
eine Erfassungs-Teileinheit (321), ausgelegt zum Erfassen des Kommunikationsauslegungsparameters des netzwerkschaltbereiten Benutzergeräts, bestimmt durch die Bestimmungseinheit für netzwerkschaltbereites Benutzergerät; und
eine Bestimmungs-Teileinheit (322), ausgelegt zum: wenn der durch die Erfassungs-Teileinheit erfasste Kommunikationsauslegungsparameter sprachzentriert ("Voice Centric") ist, Bestimmen des netzwerkschaltbereiten Benutzergeräts als ein Zielbenutzergerät.

2. Vorrichtung für Netzwerkzugang nach Anspruch 1, wobei
die Sendeeinheit ferner ausgelegt ist zum: wenn sich das Zielbenutzergerät in einem Verbindungszustand befindet, Senden einer Trennanforderung ("Detach Request") an das Zielbenutzergerät unter Verwendung einer Basisstation, wobei die Trennanforderung den voreingestellten Ursachenwert transportiert; oder
die Vorrichtung ferner eine Empfangseinheit (51) umfasst, wobei die Empfangseinheit dazu ausgelegt ist, eine durch das Zielbenutzergerät gesendete Nachverfolgungsbereich-Aktualisierungsanforderung ("Tracking Area Update Request") zu empfangen; und wobei die Sendeeinheit ferner dazu ausgelegt ist, eine Nachverfolgungsbereich-Aktualisierungsablehnungsantwort ("Tracking Area Update Reject") an das Zielbenutzergerät zu senden, wobei die Nachverfolgungsbereich-Aktualisierungsablehnungsantwort den voreingestellten Ursachenwert transportiert.

3. Vorrichtung für Netzwerkzugang nach einem der vorhergehenden Ansprüche, wobei
die Sendeeinheit ferner ausgelegt ist zum: wenn sich das Zielbenutzergerät in einem Leerlaufzustand befindet, Senden von Funkrufsignalisierung an das Zielbenutzergerät unter Verwendung einer Basisstation;
die Empfangseinheit ferner ausgelegt ist zum Empfangen einer Dienstanforderung ("Service Request"), die durch das Zielbenutzergerät gemäß der Funkrufsignalisierung gesendet wird; und
die Vorrichtung ferner eine Verbindungszustandsbestimmungseinheit umfasst, wobei die Verbindungszustandsbestimmungseinheit ausgelegt ist zum Bestimmen, gemäß der durch die Empfangseinheit empfangenen Dienstanforderung, dass sich das Zielbenutzergerät in einem Verbindungszustand befindet.

4. Vorrichtung für Netzwerkzugang nach einem der vorhergehenden Ansprüche, wobei
die Sendeeinheit ferner ausgelegt ist zum: wenn sich das Zielbenutzergerät in einem Verbindungszustand befindet, Senden einer Trennanforderung ("Detach Request") an das Zielbenutzergerät;
die Empfangseinheit ferner ausgelegt ist zum Empfangen einer Anhängeanforderung ("Attach Request"), die durch das Zielbenutzergerät gesendet wird; und
die Sendeeinheit ferner ausgelegt ist zum Senden einer Anhängeablehnung ("Attach Reject") an das Zielbenutzergerät, wobei die Anhängeablehnung den voreingestellten Ursachenwert transportiert.

5. Vorrichtung für Netzwerkzugang nach einem der vorhergehenden Ansprüche, wobei
die Sendeeinheit ferner ausgelegt ist zum: wenn sich das Zielbenutzergerät in einem Leerlaufzustand befindet, Senden einer Funkrufnachricht an das Zielbenutzergerät unter Verwendung einer Basisstation, wobei die Funkrufnachricht verwendet wird, um das Zielbenutzergerät anzuweisen, einen Netzwerkverbindungsstatus zurückzusetzen;
die Empfangseinheit ferner ausgelegt ist zum Empfangen einer Anhängeanforderung ("Attach Request"), die durch das Zielbenutzergerät gesendet wird; und
die Sendeeinheit ferner ausgelegt ist zum Senden einer Anhängeablehnung ("Attach Reject") an das Zielbenutzergerät, wobei die Anhängeablehnung den voreingestellten Ursachenwert transportiert.

6. Vorrichtung für Netzwerkzugang nach einem der vorhergehenden Ansprüche, wobei
die Sendeeinheit ferner ausgelegt ist zum: wenn sich das Zielbenutzergerät in einem Leerlaufzustand befindet, Senden einer Funkrufnachricht an das Zielbenutzergerät unter Verwendung einer Basisstation;
die Empfangseinheit ferner ausgelegt ist zum Empfangen einer Dienstanforderung ("Service Request"), die durch das Zielbenutzergerät gesendet wird;
die Sendeeinheit ferner ausgelegt ist zum Senden einer Trennanforderung ("Detach Request") an das Zielbenutzergerät; und
die Empfangseinheit ferner ausgelegt ist zum Empfangen einer Trennannahme ("Detach Accept"), die durch das Zielbenutzergerät gesendet wird.

7. Vorrichtung für Netzwerkzugang nach einem der vorhergehenden Ansprüche, wobei
die Sendeeinheit ferner ausgelegt ist zum Senden einer Trennanforderung an das Zielbenutzergerät, wobei die Trennanforderung ein Benutzerkennungsfeld zum Trennen einer IMSI (International Mobile Subscriber Identity, internationale Mobilfunkteilnehmeridentität) transportiert;
die Empfangseinheit ferner ausgelegt ist zum Empfangen einer Verfolgungsbereichsaktualisierungsanforderung ("Tracking Area Update Request"), die durch das Zielbenutzergerät gesendet wird; und
die Sendeeinheit ferner ausgelegt ist zum Senden einer Verfolgungsbereichsaktualisierungsablehnungsantwort ("Tracking Area Update Reject") an das Zielbenutzergerät, wobei die Verfolgungsbereichsaktualisierungsablehnungsantwort den voreingestellten Ursachenwert transportiert.

8. Vorrichtung für Netzwerkzugang nach einem der vorhergehenden Ansprüche, wobei der voreingestellte Ursachenwert eine Neuauswahlindikation für GERAN (Global System for Mobile Communications (GSM) Enhanced Data Rates for GSM Evolution (EDGE) Radio Access Network) oder UTRAN (Universal Mobile Telecommunications System (UMTS) Terrestrial Radio Access Network) "Reselect GERAN/UTRAN Indication" ist.

9. Verfahren für Netzwerkzugang, wobei das Verfahren Folgendes umfasst:
Bestimmen (601), durch eine Vorrichtung für Netzwerkzugang, eines Benutzergeräts als ein netzwerkschaltbereites Benutzergerät gemäß einem IMS-Funktionsunterstützungsstatus (IP Multimedia Subsystem, IP-Multimedia-Teilsystem) des Benutzergeräts (UE, User Equipment), wenn Registrierung in einer leitungsvermittelten Domäne fehlschlägt,
wobei der IMS-Funktionsunterstützungsstatus verwendet wird, um anzuzeigen, ob das Benutzergerät IMS-Sprache unterstützt;
Bestimmen (602), durch die Vorrichtung für Netzwerkzugang, des netzwerkschaltbereiten Benutzergeräts als ein Zielbenutzergerät gemäß einem Kommunikationsauslegungsparameter des netzwerkschaltbereiten Benutzergeräts, wobei der Kommunikationsauslegungsparameter verwendet wird, um einen bevorzugten Diensttyp des netzwerkschaltbereiten Benutzergeräts anzuzeigen; und
Senden (603), durch die Vorrichtung für Netzwerkzugang, einer Netzwerkschaltindikation, die einen voreingestellten Ursachenwert zum Zielbenutzergerät transportiert, wobei die Netzwerkschaltindikation verwendet wird, um das Zielbenutzergerät anzuweisen, auf ein Sprachdienstzugangsnetzwerk zuzugreifen;
wobei das Bestimmen eines netzwerkschaltbereiten Benutzergeräts gemäß einem IMS-Funktionsunterstützungsstatus eines Benutzergeräts (UE), wenn Registrierung in einer leitungsvermittelten Domäne fehlschlägt, Folgendes umfasst:
wenn Registrierung in der leitungsvermittelten Domäne fehlschlägt, wenn das Benutzergerät eine IMS-Funktion unterstützt und keinen IMS-Träger in einer voreingestellten Periode errichtet, Bestimmen des Benutzergeräts als ein netzwerkschaltbereites Benutzergerät;
wobei das Bestimmen eines Zielbenutzergeräts gemäß einem Kommunikationsauslegungsparameter des netzwerkschaltbereiten Benutzergeräts speziell Folgendes umfasst:
Erfassen (801) des Kommunikationsauslegungsparameters des netzwerkschaltbereiten Benutzergeräts; und
wenn der Kommunikationsauslegungsparameter sprachzentriert ("Voice Centric") ist, Bestimmen (802) des netzwerkschaltbereiten Benutzergeräts als ein Zielbenutzergerät.

10. Verfahren für Netzwerkzugang nach Anspruch 9, wobei das Senden einer Netzwerkschaltindikation eines voreingestellten Ursachenwerts an das Zielbenutzergerät speziell Folgendes umfasst:
wenn sich das Zielbenutzergerät in einem Verbindungszustand befindet, Senden einer Trennanforderung ("Detach Request") an das Zielbenutzergerät unter Verwendung einer Basisstation, wobei die Trennanforderung den voreingestellten Ursachenwert transportiert; oder
Empfangen einer Verfolgungsbereichsaktualisierungsanforderung ("Tracking Area Update Request"), die durch das Zielbenutzergerät gesendet wird; und
Senden einer Verfolgungsbereichsaktualisierungsablehnungsantwort ("Tracking Area Update Reject") an das Zielbenutzergerät, wobei die Verfolgungsbereichsaktualisierungsablehnungsantwort den voreingestellten Ursachenwert transportiert.

11. Verfahren für Netzwerkzugang nach einem der vorhergehenden Ansprüche, wobei vor dem Senden einer Netzwerkschaltindikation eines voreingestellten Ursachenwerts an das Zielbenutzergerät das Verfahren ferner Folgendes umfasst:
wenn sich das Zielbenutzergerät in einem Leerlaufzustand befindet, Senden von Funkrufsignalisierung an das Zielbenutzergerät unter Verwendung einer Basisstation;
Empfangen einer Dienstanforderung ("Service Request"), die durch das Zielbenutzergerät gemäß der Funkrufsignalisierung gesendet wird; und
Bestimmen, gemäß der Dienstanforderung, dass sich das Zielbenutzergerät in einem Verbindungszustand befindet.

12. Verfahren für Netzwerkzugang nach einem der vorhergehenden Ansprüche, wobei das Senden einer Netzwerkschaltindikation eines voreingestellten Ursachenwerts an das Zielbenutzergerät speziell Folgendes umfasst:
wenn sich das Zielbenutzergerät in einem Verbindungszustand befindet, Senden einer Trennanforderung ("Detach Request") an das Zielbenutzergerät;
Empfangen einer Anhängeanforderung ("Attach Request"), die durch das Zielbenutzergerät gesendet wird; und
Senden einer Anhängeablehnung ("Attach Reject") an das Zielbenutzergerät, wobei die Anhängeablehnung den voreingestellten Ursachenwert transportiert.

13. Verfahren für Netzwerkzugang nach einem der vorhergehenden Ansprüche, wobei
wenn sich das Zielbenutzergerät in einem Leerlaufzustand befindet, Senden einer Funkrufnachricht an der Zielbenutzergerät unter Verwendung einer Basisstation, wobei die Funkrufnachricht verwendet wird, um das Zielbenutzergerät anzuweisen, einen Netzwerkverbindungsstatus zurückzusetzen;
Empfangen einer Anhängeanforderung ("Attach Request"), die durch das Zielbenutzergerät gesendet wird; und
Senden einer Anhängeablehnung ("Attach Reject") an das Zielbenutzergerät, wobei die Anhängeablehnung den voreingestellten Ursachenwert transportiert.

14. Verfahren für Netzwerkzugang nach einem der vorhergehenden Ansprüche, wobei
wenn sich das Zielbenutzergerät in einem Leerlaufzustand befindet, Senden einer Funkrufnachricht an das Zielbenutzergerät unter Verwendung einer Basisstation;
Empfangen einer Dienstanforderung ("Service Request"), die durch das Zielbenutzergerät gesendet wird;
Senden einer Trennanforderung ("Detach Request") an das Zielbenutzergerät; und
Empfangen einer Trennannahme ("Detach Accept"), die durch das Zielbenutzergerät gesendet wurde.

15. Verfahren für Netzwerkzugang nach einem der vorhergehenden Ansprüche, wobei das Senden einer Netzwerkschaltindikation eines voreingestellten Ursachenwerts an das Zielbenutzergerät speziell Folgendes umfasst:
Senden einer Trennanforderung an das Zielbenutzergerät, wobei die Trennanforderung ein Benutzerkennungsfeld zum Trennen einer IMSI (International Mobile Subscriber Identity, internationale Mobilfunkteilnehmeridentität) transportiert;
Empfangen einer Verfolgungsbereichsaktualisierungsanforderung ("Tracking Area Update Request"), die durch das Zielbenutzergerät gesendet wird; und
Senden einer Verfolgungsbereichsaktualisierungsablehnungsantwort ("Tracking Area Update Reject") an das Zielbenutzergerät, wobei die Verfolgungsbereichsaktualisierungsablehnungsantwort den voreingestellten Ursachenwert transportiert.

## Revendications

1. Appareil d'accès à un réseau, l'appareil comprenant :
une unité de détermination d'équipement d'utilisateur de réseau prêt à basculer (31), configurée pour : déterminer un équipement d'utilisateur en tant qu'équipement d'utilisateur de réseau prêt à basculer en fonction d'un état de prise en charge de fonction de sous-système multimédia IP, IMS (IP Multimedia Subsystem), de l'équipement d'utilisateur, UE, lorsque l'enregistrement dans un domaine à commutation de circuits échoue, dans lequel l'état de prise en charge de fonction IMS est utilisé pour indiquer si l'équipement d'utilisateur prend en charge la voix IMS ;
une unité de détermination d'équipement d'utilisateur cible (32), configurée pour déterminer l'équipement d'utilisateur de réseau prêt à basculer en tant qu'équipement cible en fonction d'un paramètre de configuration de communication de l'équipement d'utilisateur de réseau prêt à basculer, dans lequel le paramètre de configuration de communication est utilisé pour indiquer un type de service préféré de l'équipement d'utilisateur de réseau prêt à basculer ; et
une unité d'envoi (33), configurée pour envoyer une indication de basculement de réseau transportant une valeur de cause prédéfinie à l'équipement d'utilisateur cible déterminé par l'unité de détermination d'équipement d'utilisateur cible, dans lequel l'indication de basculement de réseau est utilisée pour donner pour instruction à l'équipement d'utilisateur cible d'accéder à un réseau d'accès à un service vocal ;
dans lequel l'unité de détermination d'équipement d'utilisateur de réseau prêt à basculer est en outre configurée pour :
lorsque l'enregistrement dans le domaine à commutation de circuits échoue, si l'équipement d'utilisateur prend en charge une fonction IMS et n'établit pas de support IMS dans une période prédéfinie, déterminer l'équipement d'utilisateur en tant qu'équipement d'utilisateur de réseau prêt à basculer ;
dans lequel l'unité de détermination d'équipement d'utilisateur cible comprend :
une sous-unité d'acquisition (321), configurée pour acquérir le paramètre de configuration de communication de l'équipement d'utilisateur de réseau prêt à basculer, déterminé par l'unité de détermination d'équipement d'utilisateur de réseau prêt à basculer ; et
une sous-unité de détermination (322), configurée pour : lorsque le paramètre de configuration de communication acquis par la sous-unité d'acquisition est centré sur la voix (Voice Centric), déterminer l'équipement d'utilisateur de réseau prêt à basculer en tant qu'équipement d'utilisateur cible.

2. Appareil d'accès au réseau selon la revendication 1,
l'unité d'envoi étant en outre configurée pour : lorsque l'équipement d'utilisateur cible est dans l'état de connexion, envoyer une demande de déconnexion (Detach Request) à l'équipement d'utilisateur cible en utilisant une station de base, la demande de déconnexion transportant la valeur de cause prédéfinie ; ou
l'appareil comprenant en outre une unité de réception (51), dans lequel l'unité de réception est configurée pour recevoir une demande de mise à jour de zone de suivi (Tracking Area Update Request) envoyée par l'équipement d'utilisateur cible ; et l'unité d'envoi est en outre configurée pour envoyer une réponse de refus de mise à jour de zone de suivi (Tracking Area Update Reject) à l'équipement d'utilisateur cible, la réponse de refus de mise à jour de zone de suivi transportant la valeur de cause prédéfinie.

3. Appareil d'accès au réseau selon l'une quelconque des revendications précédentes,
l'unité d'envoi étant en outre configurée pour : lorsque l'équipement d'utilisateur cible est dans un état de veille (Idle), envoyer une signalisation de messagerie (Paging) à l'équipement d'utilisateur cible à l'aide d'une station de base ;
l'unité de réception étant en outre configurée pour recevoir une demande de service (Service Request) qui est envoyée par l'équipement d'utilisateur cible en fonction de la signalisation de messagerie ; et
l'appareil comprenant en outre une unité de détermination d'état de connexion, l'unité de détermination d'état de connexion étant configurée pour déterminer, en fonction de la demande de service reçue par l'unité de réception, que l'équipement d'utilisateur cible se trouve dans un état de connexion.

4. Appareil d'accès au réseau selon l'une quelconque des revendications précédentes, dans lequel
l'unité d'envoi est en outre configurée pour : lorsque l'équipement d'utilisateur cible est dans l'état de connexion, envoyer une demande de déconnexion à l'équipement d'utilisateur cible ;
l'unité de réception est en outre configurée pour recevoir une demande de connexion (Attach Request) envoyée par l'équipement d'utilisateur cible ; et
l'unité d'envoi est en outre configurée pour envoyer un refus de connexion (Attach Reject) à l'équipement d'utilisateur cible, le refus de connexion transportant la valeur de cause prédéfinie.

5. Appareil d'accès au réseau selon l'une quelconque des revendications précédentes, dans lequel
l'unité d'envoi est en outre configurée pour : lorsque l'équipement d'utilisateur cible est dans un état de veille, envoyer un message de messagerie à l'équipement d'utilisateur cible à l'aide d'une station de base ; dans lequel le message de messagerie est utilisé pour donner pour instruction à l'équipement d'utilisateur cible de réinitialiser un état de connexion réseau ;
l'unité de réception est en outre configurée pour recevoir une demande de connexion (Attach Request) envoyée par l'équipement d'utilisateur cible ; et
l'unité d'envoi est en outre configurée pour envoyer un refus de connexion (Attach Reject) à l'équipement d'utilisateur cible, le refus de connexion transportant la valeur de cause prédéfinie.

6. Appareil d'accès au réseau selon l'une quelconque des revendications précédentes, dans lequel
l'unité d'envoi est en outre configurée pour : lorsque l'équipement d'utilisateur cible est dans un état de veille, envoyer un message de messagerie à l'équipement d'utilisateur cible à l'aide d'une station de base ;
l'unité de réception est en outre configurée pour recevoir une demande de service (Service Request) envoyée par l'équipement d'utilisateur cible ;
l'unité d'envoi est en outre configurée pour envoyer une demande de déconnexion à l'équipement d'utilisateur cible ; et
l'unité de réception est en outre configurée pour recevoir une acceptation de déconnexion (Detach Accept) envoyée par l'équipement d'utilisateur cible.

7. Appareil d'accès au réseau selon l'une quelconque des revendications précédentes, dans lequel
l'unité d'envoi est en outre configurée pour envoyer une demande de déconnexion à l'équipement d'utilisateur cible, la demande de déconnexion transportant une déconnexion d'identité internationale d'abonné mobile, IMSI (International Mobile Subscriber Identity) de champ d'identifiant d'utilisateur ;
l'unité de réception est en outre configurée pour recevoir une demande de mise à jour de zone de suivi (Tracking Area Update Request), envoyée par l'équipement d'utilisateur cible ; et
l'unité d'envoi est en outre configurée pour envoyer une réponse de refus de mise à jour de zone de suivi (Tracking Area Update Request) à l'équipement d'utilisateur cible, la réponse de refus de mise à jour de zone de suivi transportant la valeur de cause prédéfinie.

8. Appareil d'accès au réseau selon l'une quelconque des revendications précédentes, dans lequel la valeur de cause prédéfinie est une indication de réseau d'accès radio de taux de données améliorés pour l'évolution GSM, EDGE, de système mondial de communications mobiles, GSM, GERAN ou de réseau d'accès radio terrestre de système de télécommunications mobiles universel, UMTS, UTRAN de resélection, indication GERAN/UTRAN de resélection.

9. Procédé d'accès au réseau, le procédé comprenant les étapes consistant à :
déterminer (601), par un appareil d'accès au réseau, un équipement d'utilisateur en tant qu'équipement d'utilisateur de réseau prêt à basculer, en fonction d'un état de prise en charge de fonction de sous-système multimédia IP, IMS (IP Multimedia Subsystem), de l'équipement d'utilisateur, UE, lorsque l'enregistrement dans un domaine à commutation de circuits échoue, dans lequel l'état de prise en charge de fonction IMS est utilisé pour indiquer si l'équipement d'utilisateur prend en charge la voix IMS ;
déterminer (602), par l'appareil d'accès au réseau, l'équipement d'utilisateur de réseau prêt à basculer en tant qu'équipement d'utilisateur cible en fonction d'un paramètre de configuration de communication de l'équipement d'utilisateur de réseau prêt à basculer, le paramètre de configuration de communication étant utilisé pour indiquer un type de service préféré de l'équipement d'utilisateur de réseau prêt à basculer ; et
envoyer (603), par l'appareil d'accès au réseau, une indication de basculement de réseau transportant une valeur de cause prédéfinie à l'équipement d'utilisateur cible, l'indication de basculement de réseau étant utilisée pour donner pour instruction à l'équipement d'utilisateur cible d'accéder à un réseau d'accès à un service vocal ;
dans lequel la détermination d'un équipement d'utilisateur de réseau prêt à basculer en fonction d'un état de prise en charge de fonction IMS d'un équipement d'utilisateur UE lorsque l'enregistrement dans un domaine à commutation de circuits échoue comprend l'étape consistant à :
lorsque l'enregistrement dans le domaine à commutation de circuits échoue, si l'équipement d'utilisateur prend en charge une fonction IMS et n'établit pas de support IMS dans une période prédéfinie, déterminer l'équipement d'utilisateur en tant qu'équipement d'utilisateur de réseau prêt à basculer ;
dans lequel la détermination d'un équipement d'utilisateur cible en fonction d'un paramètre de configuration de communication de l'équipement d'utilisateur de réseau prêt à basculer comprend de manière spécifique les étapes consistant à :
acquérir (801) le paramètre de configuration de communication de l'équipement d'utilisateur de réseau prêt à basculer ; et
si le paramètre de configuration de communication est centré sur la voix (Voice Centric), déterminer (802) l'équipement d'utilisateur de réseau prêt à basculer en tant qu'équipement d'utilisateur cible.

10. Procédé d'accès au réseau selon la revendication 9, dans lequel l'envoi d'une indication de basculement de réseau transportant une valeur de cause prédéfinie à l'équipement d'utilisateur cible comprend de manière spécifique les étapes consistant à :
lorsque l'équipement d'utilisateur cible est dans l'état de connexion, envoyer une demande de déconnexion (Detach Request) à l'équipement d'utilisateur cible en utilisant une station de base, la demande de déconnexion transportant la valeur de cause prédéfinie ; ou
recevoir une demande de mise à jour de zone de suivi (Tracking Area Update Request), envoyée par l'équipement d'utilisateur cible ; et
envoyer une réponse de refus de mise à jour de zone de suivi (Tracking Area Update Reject) à l'équipement d'utilisateur cible, la réponse de refus de mise à jour de zone de suivi transportant la valeur de cause prédéfinie.

11. Procédé d'accès au réseau selon l'une quelconque des revendications précédentes, avant l'envoi d'une indication de basculement de réseau transportant une valeur de cause prédéfinie à l'équipement d'utilisateur cible, le procédé comprenant en outre les étapes consistant à :
lorsque l'équipement d'utilisateur cible est dans un état de veille (Idle), envoyer une signalisation de messagerie (Paging) à l'équipement d'utilisateur cible à l'aide d'une station de base ;
recevoir une demande de service (Service Request) qui est envoyée par l'équipement d'utilisateur cible en fonction de la signalisation de messagerie ; et
déterminer, en fonction de la demande de service, que l'équipement d'utilisateur cible se trouve dans un état de connexion.

12. Procédé d'accès au réseau selon l'une quelconque des revendications précédentes, dans lequel l'envoi d'une indication de basculement de réseau transportant une valeur de cause prédéfinie à l'équipement d'utilisateur cible comprend de manière spécifique les étapes consistant à :
lorsque l'équipement d'utilisateur cible est dans l'état de connexion, envoyer une demande de déconnexion à l'équipement d'utilisateur cible ;
recevoir une demande de connexion (Attach Request) envoyée par l'équipement d'utilisateur cible ; et
envoyer un refus de connexion (Attach Reject) à l'équipement d'utilisateur cible, le refus de connexion transportant la valeur de cause prédéfinie.

13. Procédé d'accès au réseau selon l'une quelconque des revendications précédentes, dans lequel :
lorsque l'équipement d'utilisateur se trouve dans un état de veille, envoyer un message de messagerie à l'équipement d'utilisateur cible à l'aide d'une station de base, le message de messagerie étant utilisé pour donner pour instruction à l'équipement d'utilisateur cible de réinitialiser un état de connexion au réseau ;
recevoir une demande de connexion (Attach Request) envoyée par l'équipement d'utilisateur cible ; et
envoyer un refus de connexion (Attach Reject) à l'équipement d'utilisateur cible, le refus de connexion transportant la valeur de cause prédéfinie.

14. Procédé d'accès au réseau selon l'une quelconque des revendications précédentes, dans lequel :
lorsque l'équipement d'utilisateur cible est dans un état de veille, envoyer un message de messagerie à l'équipement d'utilisateur cible à l'aide d'une station de base ;
recevoir une demande de service (Service Request) envoyée par l'équipement d'utilisateur cible ;
envoyer une demande de déconnexion à l'équipement d'utilisateur cible ; et
recevoir une acceptation de déconnexion (Detach Accept) envoyée par l'équipement d'utilisateur cible.

15. Procédé d'accès au réseau selon l'une quelconque des revendications précédentes, dans lequel l'envoi d'une indication de basculement de réseau transportant une valeur de cause prédéfinie à l'équipement d'utilisateur cible comprend de manière spécifique les étapes consistant à :
envoyer une demande de déconnexion à l'équipement d'utilisateur cible, la demande de déconnexion transportant une déconnexion d'identité internationale d'abonné mobile, IMSI de champ d'identifiant d'utilisateur;
recevoir une demande de mise à jour de zone de suivi (Tracking Area Update Request), envoyée par l'équipement d'utilisateur cible ; et
envoyer une réponse de refus de mise à jour de zone de suivi (Tracking Area Update Reject) à l'équipement d'utilisateur cible, la réponse de refus de mise à jour de zone de suivi transportant la valeur de cause prédéfinie.
